Europäisches Patentamt

European Patent Office

Office européen des brevets

(11) Veröffentlichungsnummer: **0 096 420**

**A2**

(12) **EUROPÄISCHE PATENTANMELDUNG**

(21) Anmeldenummer: 83105633.8

(22) Anmeldetag: 08.06.83

(51) Int. Cl.$^3$: **G 01 N 21/51**
**G 01 N 21/03**

(30) Priorität: 09.06.82 DE 3221867

(43) Veröffentlichungstag der Anmeldung:
21.12.83 Patentblatt 83/51

(84) Benannte Vertragsstaaten:
AT BE CH DE FR GB IT LI LU NL SE

(71) Anmelder: R & Z Biologicals GmbH & Co. KG
Heinrichstrasse 27
D-4050 Mönchengladbach 1(DE)

(72) Erfinder: Steiner, Rudolf, Dr.
Heinestrasse 15
D-4040 Neuss 1(DE)

(72) Erfinder: Kaufmann, Raimund, Prof.Dr.
Florastrasse 14
D-4005 Meerbusch 1(DE)

(74) Vertreter: Schaumburg Schulz-Dörlam & Thoenes
Mauerkircherstrasse 31 Postfach 80 15 60
D-8000 München 80(DE)

(54) Vorrichtung zur Messung der Konzentration von Teilchen in Flüssigkeiten.

(57) Bei einer Vorrichtung zur Messung der Konzentration von Teilchen (18) in Flüssigkeiten, umfassend einen Probenbehälter (10) mit transparenten Wänden (20, 22), eine Lichtquelle (12) zum Einstrahlen eines Lichtstrahles (26) in den Probenbehälter (10) im wesentlichen senkrecht zu den transparenten Wänden (20) desselben und einen Detektor (14) zur Aufnahme mindestens eines Teils des von den Teilchen (18) gestreuten Lichtes, weist der Probenbehälter (10) an den Kantflächen seiner Wände (20, 22) Lichtaustrittsflächen (28, 30) auf, die mit einem Lichteintritts-element (32) des Detektors (14) optisch koppelbar sind.

Fig.4

EP 0 096 420 A2

### Vorrichtung zur Messung der Konzentration von Teilchen in Flüssigkeiten

Die Erfindung betrifft eine Vorrichtung zur Messung der Konzentration von Teilchen in Flüssigkeiten, umfassend einen mindestens eine Probenkammer aufweisenden Probenbehälter mit transparenten Wänden, eine Lichtquelle zum Einstrahlen eines Lichtstrahles in den Probenbehälter im wesentlichen senkrecht zu den transparenten Wänden desselben und einen Detektor zur Aufnahme mindestens eines Teiles des von den Teilchen gestreuten Lichtes.

In zahlreichen Fällen ist es erforderlich, die absolute Teilchenkonzentration in Suspensionen zu bestimmen. Bisherige optische Methoden beruhen auf der Messung der Turbidität, der Extinktion, der Vorwärtsstreuung oder der Rückwärtsstreuung des einfallenden Lichtstrahles durch die suspendierten Teilchen. Alle diese Meßmethoden haben nur einen sehr geringen linearen Meßbereich. Mit zunehmender Teilchenkonzentration erreicht das Meßsignal ein Maximum und fällt anschließend wieder ab. Deshalb sind diese Meßverfahren nicht für hohe Konzentrationen bzw. Teilchendichten zu gebrauchen.

Der Erfindung liegt die Aufgabe zugrunde, eine Vorrichtung der eingangs genannten Art so auszubilden, daß man auch hohe Teilchenkonzentrationen in Suspensionen zuverlässig messen kann.

Diese Aufgabe wird erfindungsgemäß dadurch gelöst, daß der Probenbehälter an den Kantflächen seiner Wände Lichtaustrittsflächen aufweist, die mit einem Lichteintrittselement des Detektors optisch koppelbar sind.

Die erfindungsgemäße Lösung beruht auf der Erkenntnis, daß mit zunehmender Konzentration der suspendierten Teilchen

- 2 -

0096420

die Mehrfachstreuung der Photonen zunimmt. Die theoretischen Streucharakteristiken haben in diesem Falle keine Bedeutung mehr, da das Licht immer gleichmäßig über den gesamten Raumwinkel abgestreut wird. Trägt man (wie dies später noch näher erläutert wird) den Logarithmus des Meßsignales (Detektorstromes) über dem Logarithmus der Teilchenkonzentration auf, dann erhält man nur eine lineare Beziehung, wenn das Streulicht über einen großen Raumwinkel gemessen wird.

Durch die erfindungsgemäße Anordnung ist diese Messung über einen großen Raumwinkel möglich, in dem die Meßküvette oder der Probenbehälter selbst als primärer Lichtleiter ausgebildet ist. Das von den Teilchen in der Suspension gestreute Licht wird durch Mehrfachreflektion in den Wänden des Probenbehälters zu den Kantflächen der Wände geführt und tritt an diesen aus. Da die Probenkammer ringsum von lichtleitenden Wänden umgeben ist, wird der größtmögliche Raumwinkel erfaßt. Die geringen Brechungsindexunterschiede zwischen der Meßflüssigkeit und dem Wandmaterial einerseits sowie die hohen Brechungsindexunterschiede zwischen Luft und Wandmaterial anderersiets begünstigen den Lichtleitereffekt der Wände. Die Wände können aus Glas oder einem für optische Zwecke geeigneten Kunststoff bestehen.

Der Detektor kann direkt gegenüber den Lichtaustrittsflächen der Behälterwände angeordnet sein. In der Regel ist es jedoch zweckmäßig, den Detektor an einer von dem Probenbehälter entfernt gelegenen Stelle anzuordnen und das aus den Lichtaustrittsflächen der Behälterwände austretende Licht über einen Lichtleiter, beispielsweise ein Faserbündel zum Detektor zu führen.

Der Probenbehälter kann von einem Rohr gebildet sein oder aber auch einen rechteckigen Grundriß aufweisen, wobei seine Wände von planparallelen Platten gebildet sind. Bei der letztgenannten Ausführungsform ist es auch möglich, durch die Anordnung von Zwischenwänden zwischen den senkrecht zur Lichteinfallsrichtung gerichteten Wänden des Probenbehälters eine Mehrzahl von Probenkammern vorzusehen. Dies ist insbesondere dann zweckmäßig, wenn die Messung der Teilchenkonzentration in einer Flüssigkeit erfolgen soll, die neben den interessierenden Teilchen auch noch Verunreinigungen enthält, so daß eine Hintergrundsmessung oder Null-Messung an einer Flüssigkeitsprobe ohne Teilchen unter denselben Meßbedingungen erforderlich ist. Zweckmäßigerweise sind in diesem Falle auch das Lichteintrittselement des Detektors und der Probenbehälter relativ zueinander verstellbar angeordnet, so daß der Meßprobenwechsel auf einfachste Weise erfolgen kann.

Um die Streuverluste am Übergang zwischen den Lichtaustrittsflächen der Behälterwände und dem Lichteintrittselement des Detektors so gering wie möglich zu halten, sind gemäß einer bevorzugten Aufführungsform der Erfindung die Lichtaustrittsflächen der eine Probenkammer umgebenden Wände des Probenbehälters von der Wandaußenseite zur Wandinnenseite hin schräg abfallend geschliffen und vorzugsweise geätzt.

Weitere Merkmale und Vorteile der Erfindung ergeben sich aus der folgenden Beschreibung, welche in Verbindung mit den beigefügten Zeichnungen die Erfindung anhand von Ausführungsbeispielen erläutert. Es zeigen:

Fig. 1      eine schematische Darstellung zur Erläuterung der Verfahren zur optischen Messung der

Teilchenkonzentration in Flüssigkeiten,

Fig. 2    eine grafische Darstellung der Abhängigkeit des Meßsignales von der Teilchenzahl bei Messung der Vorwärtsstreuung bzw. der Rückwärtsstreuung unter einem bestimmten Streuwinkel,

Fig. 3    eine der Fig. 2 entsprechende grafische Darstellung bei Messung des gestreuten Lichtes über einen größtmöglichen Raumwinkel,

Fig. 4    eine schematische Darstellung der erfindungsgemäßen Vorrichtung mit einem die Längsachse einer Probenkammer enthaltenden Schnitt durch den Probenbehälter,

Fig. 5    eine schematische Draufsicht auf die erfindungsgemäße Vorrichtung mit einem mehrere Probenkammern umfassenden Probenbehälter, und

Fig. 6    eine perspektivische halbschematische Darstellung eines rohrförmigen Probenbehälters.

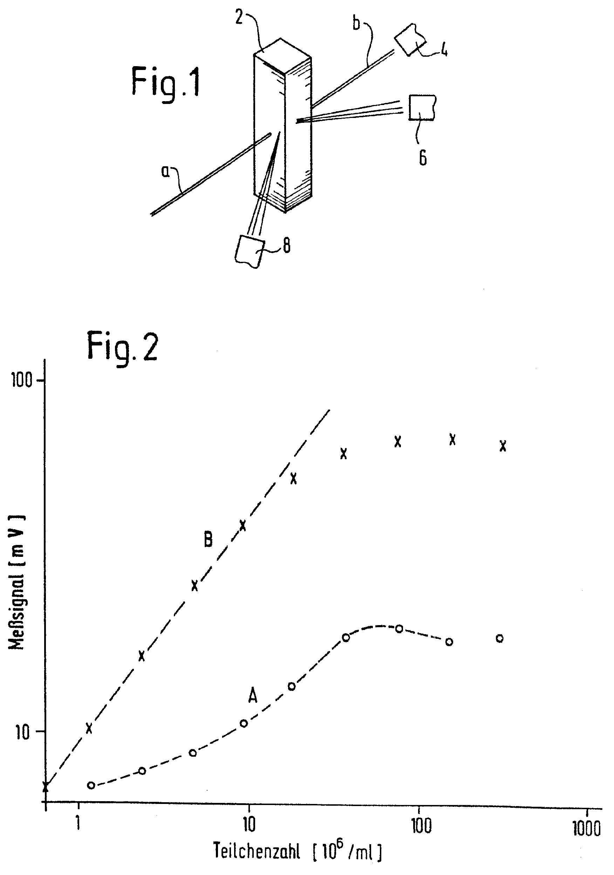

Fig. 1 zeigt schematisch die bisher üblichen optischen Meßverfahren zur Messung einer Teilchenkonzentration in einer Flüssigkeit. Ein Lichtstrahl a fällt in eine die Meßprobe enthaltende Küvette 2. Der in Richtung des einfallenden Strahles a auf der gegenüberliegenden Küvettenseite austretende Lichtstrahl b wird von einem Detektor 4 aufgefangen, mit dessen Hilfe die Extinktion gemessen wird. Aus der Extinktion läßt sich die Teilchenkonzentration berechnen.

Die Teilchenkonzentration läßt sich aber auch durch Messung der Vorwärtsstreuung mit Hilfe eines Detektors 6 oder der Rückwärtsstreuung mit Hilfe eines Detektors 8 berechnen. Diese drei bekannten optischen Meßverfahren haben den Nachteil, daß sie nur einen sehr geringen linearen Meßbereich besitzen, der für geringe Teilchenkonzentration gültig ist. Fig. 2 zeigt dies für die Rückwärtsstreuung (Kurve A) und die Vorwärtsstreuung (Kurve B). Die Streuung wurde an in einer Flüssigkeit suspendierten Latexteilchen mit einem Durchmesser von 1µm gemessen. Auf der Abszisse und der Ordinate sind jeweils im logarithmischen Maßstab die Teilchenzahl in Millionen pro Millimeter bzw. des Meßsignal in Millivolt aufgetragen. Man erkennt, daß für die Vorwärtsstreuung der lineare Meßbereich etwa bei einer Teilchenzahl von $10^7$ pro Milliliter endet, während das Meßsignal bei einer Teilchenzahl von $10^8$ ein Plateau erreicht hat und sich bei weiterer Steigerung der Teilchenzahl nicht mehr ändert. Gleiches gilt qualitativ auch für die Rückwärtsstreuung, wobei der lineare Bereich bei noch geringeren Teilchenzahlen verlassen wird.

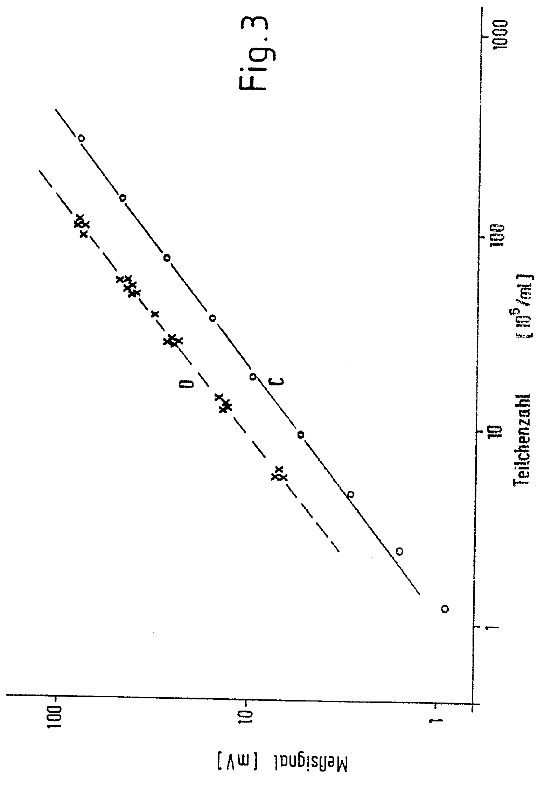

Grundlage für die erfindungsgemäße Lösung bildet nun die Erkenntnis, daß man eine lineare Beziehung zwischen dem Meßsignal und der Teilchenkonzentration auch für hohe Teilchenzahlen erhalten kann, wenn man das Streulicht über einen großen Raumwinkel, beispielsweise $2\pi$ mißt. Dies zeigen die experimentellen Ergebnisse, die mit einer im folgenden noch zu beschreibenden erfindungsgemäßen Anordnung erzielt wurden und in der Fig. 3 in einer der Fig. 2 entsprechenden grafischen Darstellung wiedergegeben sind. Die Kurve C gilt für suspendierte Latexteilchen mit einem Durchmesser von 1µm, während die Kurve D die Meßergebnisse für Spermatozen wiedergibt. In der Fig. 3 erkennt man, daß bei einer Messung des Streulichtes über einen größtmöglichen Raumwinkel in dem doppellogarithmischen Maßstab der Darstellung eine lineare Beziehung zwischen dem Meßsignal und den Teilchenzahlen bis hinauf zu $10^9$ Teilchen pro Milliliter erhalten wird und daß mit der nun im folgenden beschriebenen Anordnung auch hohe Teilchenkonzentrationen zuverlässig und genau gemessen werden können.

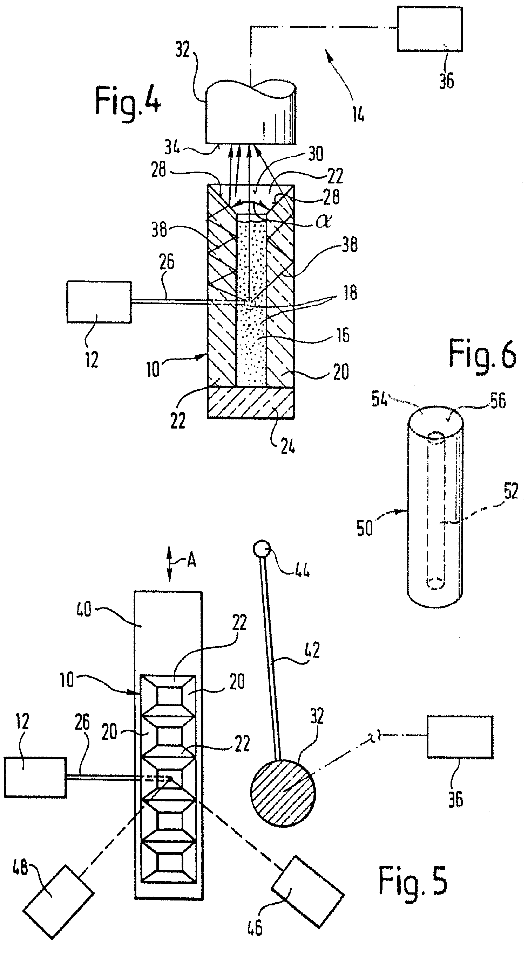

In der Fig. 4 erkennt man einen allgemein mit 10 bezeichneten Probenbehälter, eine Lichtquelle 12 und eine allgemein mit 14 bezeichnete Detektoranordnung.

Der Probenbehälter 10 weist eine Probenkammer 16 zur Aufnahme einer Meßflüssigkeit mit darin suspendierten Teilchen 18 auf. Die Probenkammer 16 besitzt einen rechteckigen Grundriß und ist von vier planparallelen Platten 20 und 22 sowie einem Boden 24 begrenzt. Die Platte 20 und 22 bestehen aus Glas oder einem für optische Zwecke geeigneten Kunststoff mit einem Brechungsindex von ca. 1,5 und besitzen eine Stärke von ca. 1mm. Die Probenkammer besitzt in Richtung des senkrecht zu den Behälterwänden 20 einfallenden Lichtstrahles 26 eine Stärke von ca. 1mm. Die Schichtdicke der Meßprobe kann dabei im Bereich von 0,1 mm bis 2 mm variieren.

Oberhalb des Probenbehälters 10 ist ein schematisch angedeuteter flexibler Lichtleiter 22 derart angeordnet, daß seine Eintrittsfläche 34 im wesentlichen senkrecht zur Längsachse der Probenkammer 16 gerichtet ist. Der Durchmesser des Lichtleiters 32 ist so bemessen, daß die Endfläche 34 zumindest annähernd der Querschnittsfläche des Probenbehälters senkrecht zur Längsachse der Probenkammer 16 entspricht. Der Lichtleiter ist mit einem photoelektrischen Wandler 36 verbunden, wie dies in der Fig. 4 schematisch dargestellt ist.

Der aus der Lichtquelle 12, beispielsweise einem Laser austretende Lichtstrahl 26 fällt senkrecht auf die ihm zugewandte Platte des Probenbehälters 10 auf und dringt in die Probenkammer 16 ein, wo das Licht an den suspendierten Teilchen 18 in alle Raumrichtungen gestreut wird. Aufgrund des geringen Unterschiedes der Brechungsindizes des Wandmaterials und der Meßflüssigkeit dringt das Streulicht in die Behälterwände ein, in denen es durch Mehrfachreflektion an den Grenzflächen zu den oberen Lichtaustrittsflächen 28 und 30 geleitet wird. An diesen Lichtaustrittsflächen 28 und 30 tritt das Streulicht aus und durch die Endfläche 34 in den Lichtleiter 32 ein. Der Strahlengang des Streulichtes innerhalb der Probenkammer 16 und den Platten 20 bzw. 22 ist durch die Pfeillinien 38 schematisch angedeutet.

Um zu erreichen, daß möglichst alles Streulicht, welches aus den Kantflächen 28 und 30 der Platten 20 bzw. 22 austritt, auch wirklich in den Lichtleiter 32 gelangt, und möglichst wenig Streulicht beim Übergang zwischen Probenbehälter 10 und Lichtleiter 32 verloren geht, sind die Kantflächen 28 und 30 der Platten 20 bzw. 22 so angeschliffen, daß sie jeweils von der Plattenaußenseite zur Platteninnenseite hin abfallen und somit eine Art Trichter mit einem Öffnungswinkel $\alpha$ bilden. Dadurch entsteht eine gewisse Bündelung des austretenden Streulichtes auf die Endfläche 34 des Lichtleiters 32 hin. Die Größe des Winkels $\alpha$ richtet sich dabei nach der Divergenz des Lichtleiters 32. Die geschliffenen Lichtaustrittsflächen 28, 30 können ferner geätzt sein.

Der vorstehend beschriebene Probenbehälter 10 kann mit einer einzigen Probenkammer ausgebildet sein, wie dies bisher beschrieben wurde. Die Fig. 5 zeigt, daß der Probenbehälter 10 jedoch auch eine Vielzahl der in der Fig. 4 dargestellten Probenkammern enthalten kann, wobei die Platten 20 sämtlichen Probenkammern gemeinsam sind und die Begrenzungswände 22 mit Ausnahme der beiden Endwände als Zwischenwände zwischen den Platten 20 angeordnet sind. Die Wände oder Platten 22 sind in diesem Falle an ihren oberen Enden keilförmig geschliffen, so wie dies in der Fig. 5 zu erkennen ist.

Der in der Fig. 5 dargestellte Probenbehälter 10 ist auf einer schematisch angedeuteten Schiene 40 in Richtung des Doppelpfeiles A hin- und herverschiebbar gelagert, so daß jeweils eine der gewünschten Probenkammern 16 in den Weg des Lichtstrahles 26 gebracht werden kann.

Um den Probenbehälter 10 nach oben herausnehmen zu können oder die Meßproben in die offenen Probenkammern 16 einfüllen zu können, ist das den Lichtaustrittsflächen 28 und 30 der Wände 20 bzw. 22 zugewandte Ende des Lichtleiters 32 an einem Schwenkarm 34 gelagert, der um eine parallel zur Längsachse der Probenkammer 16 verlaufende Achse 44 schwenkbar ist.

In die Fig. 5 wurde noch schematisch zwei weitere Detektoren 46 und 48 eingezeichnet, mit denen die Vorwärtsstreuung bzw. die Rückwärtsstreuung des eingestrahlten Lichtes gemessen werden kann. Die Darstellung in der Fig. 5 zeigt besonders deutlich, daß sich durch die erfindungsgemäße Anordnung auf einfachste Weise neben der Messung der Vorwärtsstreuung und/oder der Rückwärtsstreuung, aus der sich beispielsweise Aussagen über eine Bewegung der Teilchen in der Flüssigkeit gewinnen lassen, das über einen Raumwinkel von 2$\chi$ ausgestrahlte Streulicht messen läßt. Wie bereits eingangs festgestellt wurde, läßt sich bei diesem Meßverfahren, auch bei hohen Teilchenkonzentrationen, eine lineare Beziehung zwischen dem Meßsignal und der Teilchenkonzentration herstellen.

Fig. 6 zeigt einen Probenbehälter 50, der rohrförmig ausgebildet ist. Bei diesem Probenbehälter ist die Probenkammer 52 von einer zylindrischen Wand 54 umschlossen, die an ihrem offenen Ende eine konische Lichtaustrittsfläche 56 aufweist. Im übrigen gilt für den Probenbehälter 50 das für den Probenbehälter 10 gesagte. Der Probenbehälter 50 läßt sich in der gleichen Weise in der beschriebenen Vorrichtung verwenden wie der Probenbehälter 10.

Patentansprüche

1. Vorrichtung zur Messung der Konzentration von Teilchen in Flüssigkeiten, umfassend einen mindestens eine Probenkammeraufweisenden Probenbehälter mit transparenten Wänden, eine Lichtquelle zum Einstrahlen eines Lichtstrahles in den Probenbehälter im wesentlichen senkrecht zu den transparenten Wänden desselben und einen Detektor zur Aufnahme mindestens eines Teils des von den Teilchen gestreuten Lichtes, dadurch gekennzeichnet, daß der Probenbehälter (10;50) an den Kantflächen seiner Wände (20, 22;54) Lichtaustrittsflächen (28, 30; 56) aufweist, die mit einem Lichteintrittselement (32) des Detektors (14) optisch koppelbar sind.

2. Vorrichtung nach Anspruch 1, dadurch gekennzeichnet, daß die Wände (20, 22; 54) des Probenbehälters (10; 50) aus Glas bestehen.

3. Vorrichtung nach Anspruch 1, dadurch gekennzeichnet, daß die Wände (20, 22; 54) des Probenbehälters (10; 50) aus Kunststoff bestehen.

4. Vorrichtung nach einem der Ansprüche 1 bis 3, dadurch gekennzeichnet, daß das Lichteintrittselement des Detektors (14) von einem flexiblen Lichtleiter (32) gebildet ist.

5. Vorrichtung nach einem der Ansprüche 1 bis 4, dadurch gekennzeichnet, daß der Probenbehälter (10) einen rechteckigen Grundriß aufweist und daß seine Wände (20, 22) von planparallelen Platten gebildet sind.

6. Vorrichtung nach Anspruch 5, dadurch gekennzeichnet, daß zwischen den senkrecht zur Lichteinfallsrichtung gerichteten Wänden (20) des Probenbehälters (10) durch Zwischenwände (22) eine Mehrzahl von Probenkammern (16) gebildet ist.

7. Vorrichtung nach einem der Ansprüche 1 bis 4, dadurch gekennzeichnet, daß der Probenbehälter (50) rohrförmig ausgebildet ist.

8. Vorrichtung nach einem der Ansprüche 1 bis 7, dadurch gekennzeichnet, daß die Lichtaustrittsflächen (28, 30; 56) der eine Probenkammer (16; 52) umgebenden Wände (20, 22, 54) des Probenbehälters (10; 50) von der Wandaußenseite zur Wandinnenseite hin abfallen.

9. Vorrichtung nach einem der Ansprüche 1 bis 8, dadurch gekennzeichnet, daß die Lichtaustrittsflächen (28, 30; 56) der Behälterwände (20, 22; 54) geätzt sind.

10. Vorrichtung nach einem der Ansprüche 1 bis 9, dadurch gekennzeichnet, daß das Lichteintrittselement (32) des Detektors (14) und der Probenbehälter (10; 50) relativ zueinander verstellbar sind.

Fig.1

Fig.2

Fig. 3

Fig.4

Fig.6

Fig.5